# EUROPÄISCHE PATENTSCHRIFT

(11) **EP 3 150 449 B1**
(45) Veröffentlichungstag und Bekanntmachung des Hinweises auf die Patenterteilung: **17.02.2021**
(21) Anmeldenummer: 16001670.5
(22) Anmeldetag: 28.07.2016
(51) Int. Cl.: B60T 7/04, B60T 7/06

(54) **BAUMASCHINE, INSBESONDERE GUMMIRADWALZE ODER STRASSENFERTIGER**
CONSTRUCTION MACHINE, IN PARTICULAR TIRED ROLLER OR PAVER
VEHICULE, EN PARTICULIER COMPACTEUR OU FINISSEUR DE ROUTE

(30) Priorität: 30.09.2015 DE 102015012666
(43) Veröffentlichungstag der Anmeldung: 05.04.2017
(73) Patentinhaber: BOMAG GmbH, 56154 Boppard (DE)
(72) Erfinder: Klein, Thomas, 56653 Wehr (DE); Haubrich, Thomas, 56290 Gödenroth (DE)
(74) Vertreter: Heidler, Philipp

(56) Entgegenhaltungen:
- EP-A1- 0 711 872
- EP-A2- 2 374 657
- WO-A1-90/15747
- DE-A1-102007 018 744
- US-A- 4 730 691
- US-A- 5 921 340
- US-A1- 2003 127 272
- US-A1- 2012 048 639
- US-A1- 2015 075 318

## Beschreibung

Selbstfahrende Baumaschinen zur Bodenverdichtung, wie etwa Tandemwalzen, werden im Fahrbetrieb üblicherweise mit vergleichsweise geringen Geschwindigkeiten bewegt. Als Beispiel sei hier das Modell BOMAG BW 206 AD-5 AM der Anmelderin angegeben, für das eine Höchstgeschwindigkeit von ca. 12 km/h ausgewiesen ist. Aus diesem Grund ist im Allgemeinen auch trotz des hohen Gewichts dieser Baumaschinen die maximale Bremswirkung, die benötigt wird, um eine solche Maschine zum Stillstand zu bringen, vergleichsweise gering. Daher werden Baumaschinen der eingangs genannten Art häufig über allein eine hydrostatische Bremsanordnung ausreichend gebremst. Der Vorteil einer hydrostatischen Bremsanordnung liegt darin, dass sie sich besonders für eine rekuperative Bremsung eignet, bei der die durch den Bremsvorgang verlorene kinetische Energie nutzbar gemacht werden kann. Entsprechende Bremsanordnungen sind im Stand der Technik beispielsweise aus der Offenlegungsschrift DE 10 2006 050 873 A1 und der Offenlegungsschrift DE 10 2006 060 014 A1 bekannt. Eine Besonderheit hydrostatischer Bremsanordnungen ist unter anderem auch, dass sie keine neben der Gasregulation separate Betätigung durch den Maschinenführer erfordern.

Ein Teil der Baumaschinen der eingangs genannten Art, insbesondere Gummiradwalzen, weisen allerdings deutlich höhere Spitzengeschwindigkeiten auf und können beispielsweise bis zu 20 km/h erreichen. Eine Gummiradwalze ist beispielsweise in der Patentveröffentlichung DE 11 2011 104 404 T5 beschrieben. Für solche Maschinen ist die alleinige Bremswirkung einer hydrostatischen Bremsanordnung nicht ausreichend, um die Baumaschine in zufriedenstellender Zeit zum Stillstand zu bringen. Dementsprechend ist eine zusätzliche Bremsanordnung erwünscht. Im Unterschied zu hydrostatischen Bremssystemen müssen derartige Bremsanordnungen zur Auslösung eines Bremsvorganges jedoch explizit bzw. separat zur Gasregulation vom Maschinenführer betätigt werden. Daher wird eine Betätigungsvorrichtung benötigt, über die sich die Bremsanordnung vom Maschinenführer bedienen lässt. Dies stellt in der Konstruktion derartiger Baumaschinen insofern eine Herausforderung dar, da hier häufig die Bedienposition des Fahrers innerhalb der Fahrerkabine variabel ist, wobei hier "variabel" nicht im Sinne einer minimalen Sitzverstellung zur Berücksichtigung verschiedener Körpergrößen zu verstehen ist, sondern konkret verschiedene Bedienpositionen innerhalb der Fahrstandes, beispielsweise alternativ auf der rechten und auf der linken Seite, bedeutet. Im Stand der Technik ist es hierzu bekannt, dass der Fahrstand gleichzeitig mehrere Fahrersitze an unterschiedlichen Positionen im Fahrstand umfasst. Alternativ sind Sitzanordnungen bekannt, bei denen ein einzelner Fahrersitz durch Verschiebung und/oder Drehung unterschiedliche Positionen im Fahrstand einnehmen kann. Dies kann beispielsweise über geeignete Schienensysteme, Schwenkarme oder Schwenk- und/oder Schiebekonsolen erfolgen. Insbesondere für solche Fälle ist es bekannt, die Betätigungselemente, wie insbesondere das Bremspedal, entweder in mehrfacher Ausführung im Fahrstand vorzusehen oder verhältnismäßig aufwändig mit dem Fahrersitz mitzuführen, was einen nicht unerheblichen Aufwand zur Führung der Hydraulikschläuchen und/oder elektrischen Signalleitungen erfordert. Die bisherigen Lösungen sind somit vergleichsweise kompliziert und führen zum Teil zu unerwünschten Redundanzen bzw. Parallelarchitekturen, was ebenfalls zu höheren Produktions- und Wartungskosten führt.

Aus der WO 90/15747 A1 ist ein Fahrzeug bekannt, welches für eine Bedienung im Rechtsverkehr und alternativ im Linksverkehr eine umbaubare Bremsbetätigungseinrichtung vorsieht, die einen Umrüstung für entweder eine linksseitige oder eine rechtsseitige Bedienung vorsieht. Eine weitere Bedienpedalanordnung ist ferner aus der US 2015/0075318A1 bekannt, die für stehende Maschinen einen doppelten Pedalsatz vorsieht, um dem Bediener die Bedienung aus verschiedenen Körperhaltungen heraus zu ermöglichen. Die US 5,921,340 A offenbart einen Gabelstapler mit einem schwenkbaren Sitz. Die DE 12 2007 018 744 A1 beschreibt eine verschiebbare Sitzanordnung.

Die Aufgabe der vorliegenden Erfindung ist es, eine Betätigungsvorrichtung für die Bremsanordnung einer Baumaschine der eingangs genannten Art anzugeben, die insbesondere einen Fahrstand mit verschiedenen vorgesehenen Bedienpositionen aufweist, die zugleich einfach aufgebaut ist wie auch flexibel aus unterschiedlichen Positionen bedient werden.

Die Lösung dieser Aufgabe gelingt mit einer Baumaschine mit den Merkmalen des Anspruchs 1. Bevorzugte Weiterbildungen sind in den abhängigen Ansprüchen wiedergegeben.

Konkret gelingt die Lösung der Aufgabe mit einer Baumaschine, die eine Bremsanordnung zum Bremsen der Baumaschine und einen Fahrstand umfasst. Der Fahrstand weist mindestens einen Fahrersitz mit insgesamt mindestens zwei Seitenbedienpositionen für einen Maschinenführer auf. Eine "Seitenbedienposition" bezeichnet konkret eine Stellung des Fahrersitzes zur Seite der Baumaschine, dies bedeutet in Arbeitsrichtung gesehen ist der Fahrersitz rechts oder links im Fahrstand positioniert. Aus der jeweiligen Seitenbedienposition kann der Maschinenbediener im Fahrstand somit eine Seite der Maschine einsehen bzw. entlang der Seite einer Maschine blicken. Von der Erfindung mit umfasst ist, dass der Fahrersitz in seiner jeweiligen Seitenbedienposition noch feinjustierbar ist, um beispielsweise eine Anpassung der Sitzposition an verschiedene Körpergrößen zu ermöglichen. Diese reguläre Sitzanpassung in einer bestimmten Seitenbedienposition ist vorliegend allerdings ausdrücklich nicht von der Verstellung des gesamten Fahrersitzes in verschiedene Seitenbedienposition mit umfasst. Die Seitenbedienpositionen befinden sich vorzugsweise an einander gegenüberliegenden Enden des Fahrstandes, beispielsweise zur rechten Seite des Fahrstandes und zur linken Seite des Fahrstandes bezogen auf die Arbeits- oder Vorwärtsrichtung der Baumaschine. Weiterhin umfasst der Fahrstand eine Betätigungsvorrichtung zur Fußbetätigung der ersten Bremsanordnung. Die Betätigungsvorrichtung ist somit durch den im Fahrersitz sitzenden Bediener durch eine Fußbewegung betätigbar.

Der wesentliche Grundgedanke der Erfindung liegt nun darin, die Betätigungsvorrichtung für die Bremsanordnung mit einem Bremsbalken auszubilden, wobei sich der Bremsbalken quer zur Arbeitsrichtung der Baumaschine im Fahrstand derart erstreckt, dass er von den wenigstens zwei Seitenbedienpositionen aus vom Bediener mit dem Fuß bedient, insbesondere gedrückt, werden kann. Der erfindungsgemäße Bremsbalken bezeichnet somit ein längserstrecktes Bedienelement, welches mit seiner Längserstreckung insbesondere quer zur Arbeitsrichtung im Fahrstand verläuft derart, dass er von einem im Fahrersitz sitzenden Bediener aus verschiedenen Stellungen des Fahrersitzes und idealerweise über das gesamte Verstellspektrum des Fahrersitzes aus erreichbar und mit dem Fuß zur Auslösung einer Bremsbewegung betätigbar ist. Letztlich fungiert der Bremsbalken als Übertragungselement vom Fahrer zu einem Aktuator für den Bremsbalken der Betätigungsvorrichtung, wobei der Aktuator unterhalb des Bremsbalkens angeordnet ist. Damit kann bei einer Sitzverstellung zwischen verschiedenen Seitenbedienpositionen einerseits auf die Mitführung des Bremspedals verzichtet werden, wodurch der konstruktive Aufwand erheblich verringert wird. Andererseits ist auch nur ausschließlich ein einziger Bremsaktuator erforderlich, der zur Aufnahme und Weiterleitung des Bremssignals ausgebildet ist, da der Maschinenbediener das Bremssignal auch aus verschiedenen Seitenbedienpositionen zentral über ein und denselben Bremsbalken abgeben kann. Dabei gelingt die konkrete konstruktive Umsetzung des Bremsbalkens auf einfache und preiswerte Weise.

In der praktischen Umsetzung hat sich gezeigt, dass es besonders günstig ist, wenn sich der Bremsbalken durchgängig über mindestens 65% und ganz besonders über mindestens 80% der Breite des Bodenbereiches des Fahrstandes, speziell in mittiger Anordnung bezogen auf die Längsmittellinie in Arbeitsrichtung, erstreckt. Durchgängig ist dabei so zu verstehen, dass der Bremsbalken derart ausgebildet ist, dass er über seine gesamte Länge hinweg betätigbar ist. Durchgängig ist der Bremsbalken in diesem Zusammenhang somit auch dann, wenn er Lochungen oder vergleichbare Strukturen aufweist, solange dies die durchgängige Bedienbarkeit, insbesondere Fußbedienbarkeit, nicht behindert. Die hier maßgebliche Breite des Bodenbereiches richtet sich nach der Anordnung des Bremsbalkens. Läuft dieser quer zur Arbeitsrichtung durch den Fahrstand, ist die Breite des Fahrstandes bzw. insbesondere dessen Fußbodens hier maßgeblich, wobei hier besonders derjenige Fußbodenbereich relevant ist, in dem die beiden Seitenbedienpositionen des Fahrersitzes liegen bzw. in dem der Bremsbalken aus einer aus dem Fahrersitz heraus erreichbaren Position am Fußboden angeordnet ist.

Gemäß einer bevorzugten Weiterbildung der Erfindung ist eine dem Fahrersitz zugewandte Oberfläche des Bremsbalkens, entsprechend der Trittfläche des Bremsbalkens, als durchgehende, insbesondere zur Außenseite geschlossene, Betätigungsfläche ausgebildet. Dies ist beispielsweise insofern vorteilhaft, als dass dadurch der Eintrag von Verschmutzungen in den Bereich unterhalb des Bremsbalkens verhindert oder zumindest vermindert werden kann. Besonders bevorzugt ist es hierbei, wenn die Betätigungsfläche einen Antirutschbelag umfasst, so dass das Risiko verringert wird, dass der Maschinenführer bei der Bedienung des Bremsbalkens mit dem Fuß abgleitet und daher den Bremsvorgang nicht wie gewünscht kontrollieren kann. Ein solcher Antirutschbelag kann beispielsweise eine aufgeraute oder sonst wie in geeigneter Weise strukturierte Oberfläche bekannter Art sein. Insbesondere aus herstellungsbedingten Gründen hat sich ferner eine rechteckige Ausführung der Betätigungsfläche und/oder ein quaderförmige Ausbildung der Bremsbalkens als vorteilhaft erwiesen.

Die konkrete Lagerung des Bremsbalkens kann variieren. So ist es beispielsweise möglich, den Bremsbalken an Seitenführungen in seinen Randbreichen oder unmittelbar und ausschließlich auf einem Betätigungsaktuator zu lagern. Besonders günstig und in einer auch zur Nachrüstung geeigneten Weise gelingt die Lagerung des Bremsbalkens für einen Fahrstand mit einem Fahrstandboden dann, wenn der Bremsbalken über ein Gelenk, insbesondere eine Scharnier, vorzugsweise direkt, drehbar an dem Fahrstandboden gelagert ist. Um eine besonders sichere Lagerung zu ermöglichen, ist es in Anbetracht der Längserstreckung des Bremsbalkens bevorzugt, wenn hier nicht nur ein einziges Gelenk, insbesondere Scharnier, zum Einsatz kommt, sondern auf eine Vielzahl von Gelenken/Scharnieren, insbesondere drei und mehr, die idealerweise in regelmäßigen Abständen in Richtung der Längserstreckung des Bremsbalkens verteilt angeordnet sind, zur Lagerung des Bremsbalkens zurückgegriffen wird. Dadurch kann der Bremsbalken besonders zuverlässig und robust gelagert werden. Besonders geeignet ist es, wenn der Bremsbalken mit einer dem Fahrersitz zugewandten Kante über die Gelenke/Scharniere an dem Fahrstandboden gelagert ist, so dass er vom Fahrer weg herabschwenkbar ist. Auf diese Weise ist eine Fußbetätigung besonders gut möglich.

Gemäß einer weiteren bevorzugten Ausführungsform umfasst die Betätigungsvorrichtung einen Gelenk-, insbesondere Scharnierschutz. Dieser ist oberhalb des Gelenks/Scharniers angeordnet und insbesondere als eine abgekantete Schutzleiste entlang der gesamten dem Fahrersitz zugewandten Kante des Bremsbalkens ausgebildet. Durch den Gelenk-/Scharnierschutz kann das Risiko vermindert werden, dass das Gelenk/Scharnier beschädigt oder beeinträchtigt wird, was ansonsten beispielsweise durch das Betätigungsverhalten des Maschinenführers oder durch von dem Maschinenführer in den Fahrstand eingeschleppten Sand oder Schmutz geschehen könnte. Dies hat beispielsweise zur Folge, dass sich der Wartungsaufwand für das Gelenk/Scharnier deutlich verringert.

Gemäß einer weiteren bevorzugten Ausführungsform der Erfindung ist eine dem Fahrersitz abgewandte Kante des Bremsbalkens von der Trittfläche des Bremsbalkens abgekantet, speziell nach unten hin umgebogen. Insbesondere ist diese Kante doppelt in einem rechten Winkel nach innen umgebogen, so dass der doppelt umgebogene Teil der Kante eine Auflagefläche für den Bremsbalken in Form eines U-förmigen Profils bildet. Auf diese Weise kann die dem Fahrersitz abgewandte Kante beispielsweise einen Stopp bilden, mit dem der Bremsbalken auf dem Fahrstandboden aufliegen kann, ohne dass die gesamte Unterseite des Bremsbalkens parallel zu dem Fahrstandboden ist. Der Bremsbalken, insbesondere die Betätigungsfläche, kann auf diese Weise auch beim Aufliegen in einer voll betätigten Position eine gewisse Neigung gegenüber dem Fahrstandboden beibehalten, insbesondere im Bereich von größer 0° bis 20°, so dass eine ergonomisch günstigere Fußposition für den Maschinenführer auch bei betätigtem respektive herab gedrücktem Bremsbalken ermöglicht wird.

Über den Bremsbalken erfolgt letztlich direkt oder indirekt die Weiterleitung der Balkenstellung an einen Bremsaktuator. Ideal ist es nun, wenn eine Übertragungsmechanik für den Aktuator durch den Bremsbalken und den Fahrstandboden nach oben hin vollständig abgedeckt wird. Insbesondere in Verbindung mit den genannten Gelenken/Scharnieren und der entsprechenden Schutzleiste wird so unter dem Bremsbalken ein mehr oder weniger zum Fahrstandinneren hin abgeschirmter Hohlraum für die Übertragungsmechanik und den Aktuator erhalten.

Der Bremsbalken ist vorzugsweise federbeaufschlagt, insbesondere in Richtung einer Endstellung, in der keine Bremsbetätigung ausgelöst wird. Die Federbeaufschlagung kann derart ausgebildet sein, dass sie direkt auf den Bremsbalken wirkt. In diesem Fall ist somit eine Rückstellfeder am Bremsbalken angelenkt. Vorzugsweise erfolgt die Rückstellung des Bremsbalkens allerdings über einen federbeaufschlagten Aktuator. Dabei ist der Aktuator mit der Rückstellvorrichtung so beaufschlagt, dass bei einer Nichtbetätigung des Bremsbalkens dieser durch die Rückstellvorrichtung selbsttätig in eine Ruheposition bzw. in eine keine Bremswirkung auslösende Position zurückgestellt wird. Die Rückstellvorrichtung ist dazu insbesondere unterhalb des Bremsbalkens angeordnet. In Bezug auf eine Ausfallsicherheit ist es besonders vorteilhaft, wenn die Rückstellvorrichtung mehrere Rückstellfedern umfasst, die insbesondere parallel zueinander wirkend angeordnet sind. Grundsätzlich von der Erfindung mit umfasst sind auch solche Weiterbildungen, bei denen die Rückstellfeder durch ein anderes elastisches Bauelement, wie beispielsweise einem Gummipuffer, ersetzt ist. Kennzeichnend für die genannte Ausführungsform ist letztendlich, dass die selbsttätige Rückstellung des Bremsbalkens in seine Ruheposition sichergestellt wird.

Da die Bremse in Bezug auf die Betriebssicherheit einer Baumaschine ein zentrales Element darstellt, muss sichergestellt werden, dass diese über den Betrieb hinweg zuverlässig betätigbar ist. Als Sicherheitsvorkehrung ist hierzu insbesondere vorgesehen, dass der Bremsbalken so gelagert ist, dass er bei einem Bruch der Rückstellfeder durch sein Eigengewicht selbsttätig nach unten sinkt und somit den Aktuator dauerhaft betätigt. Dadurch wird eine Bremswirkung ausgelöst, und die Baumaschine kommt zum Stillstand. Eine weitere Sicherheitsvorkehrung kann darin bestehen, dass die Betätigungsvorrichtung einen Federbruchsensor umfasst. Dieser dient insbesondere dazu, einen Federbruch der Rückstellfeder des Bremsbalkens zu detektieren. Auf diese Weise kann die Betriebssicherheit des Bremsbalkens verbessert werden, da eine Beschädigung der Rückstellfeder festgestellt werden kann und somit beispielsweise ein Nothalt der Maschine veranlasst werden kann, sollte der Detektor einen Federbruch feststellen. Der Federbruchsensor kann beispielsweise unterhalb des Bremsbalkens angeordnet sein. Unabhängig von der Verwendung einer Rückstellfeder sind somit grundsätzlich vorzugsweise Einrichtungen mit in die Betätigungsvorrichtung integriert, die die Funktionsfähigkeit der Betätigungsvorrichtung sicherstellen.

In der konkreten Umsetzung der Erfindung hat es sich als vorteilhaft erwiesen, wenn der Aktuator im Verhältnis zum Bremsbalken Mittig, insbesondere in Bezug auf dessen Längserstreckung, angeordnet ist. Konkret bezieht sich diese mittige Anordnung somit auf die Ausdehnung des Bremsbalkens entlang einer Längsmittelachse des Bremsbalkens. In Relation zur Arbeitsrichtung der Baumaschine verläuft die Längsmittelachse des Bremsbalkens vorzugsweise somit horizontal und im Wesentlichen senkrecht zur Arbeitsrichtung. Durch die zentrale Anordnung des Aktuators am Bremsbalken lässt sich ein möglichst einheitliches Bedienverhalten des Bremsbalkens über die gesamte Breite des Bremsbalkens hinweg sicherstellen.

Der Aktuator kann ferner mit dem Bremsbalken direkt verbunden sein. Bevorzugt ist allerdings eine Anordnung des Aktuators zum Bremsbalken in der Weise, dass dieser auf dem Aktuator aufliegt und bei einer Betätigung des Bremsbalkens die beiden Bauteile sich relativ zueinander bewegen, wobei sie im direkten Kontakt bleiben. Um hier Reibungskräfte zu reduzieren, ist vorzugsweise am Aktuator eine Kontaktrolle angeordnet, über die der Bremsbalken auf dem Aktuator aufliegt. Dabei bildet vorzugsweise die Unterseite des Bremsbalkens direkt eine Abrollfläche für die Kontaktrolle. Auf diese Weise kann die Neigung des Bremsbalkens in eine Bewegung des Aktuators übertragen werden.

Bei der konkreten Ausgestaltung des Aktuators kann im Wesentlichen auf die im Stand der Technik bekannten Aktuatoren zurückgegriffen werden. Ein als Bremswippe ausgebildeter Aktuator, der ein um eine Achse rotierbar Hebelelement umfasst, ist dabei besonders geeignet. Der durch den Bremsbalken betätigte Aktuator ist vorzugsweise entweder mechanisch mit einem elektrischen, hydraulischen oder pneumatischen Bremsventil verbunden oder auch elektronisch. Mithilfe dieses Bremsventils kann in im Stand der Technik bekannter Weise ein Bremsvorgang für die Bremsanordnung eingeleitet werden.

Weiterhin ist es bevorzugt, dass die Betätigungsvorrichtung einen Seitenschutz umfasst, der an einer dem Fahrersitz abgewandten Seite des Bremsbalkens angeordnet ist und dazu ausgebildet ist, einen Hohlraum unterhalb des Bremsbalkens zu dieser Seite hin abzudichten. Die dem Fahrersitz abgewandte Seite des Bremsbalkens ist dabei insbesondere eine Stirnseite des Bremsbalkens und verläuft in der Fläche ihrer Erstreckung im Wesentlichen parallel zur Arbeitsrichtung der Baumaschine. Auf diese Weise sind die in dem Hohlraum unterhalb des Bremsbalkens angeordneten Teile der Betätigungsvorrichtung, wie beispielsweise der Aktuator, auch von dieser Seite her vor Schmutz und unabsichtlichen Beeinträchtigungen durch den Maschinenführer geschützt. Der Seitenschutz kann einstückig mit der Betätigungsfläche des Bremsbalkens ausgebildet sein.

Gemäß einer weiteren bevorzugten Ausführungsform umfasst die Betätigungsvorrichtung einen Drehwinkelsensor, der unterhalb des Bremsbalkens oder unterhalb des Fahrstandbodens angeordnet ist. Der Drehwinkelsensor ist hierbei dazu ausgebildet, einen Drehwinkel des Bremsbalkens zu bestimmen. Dabei kann die Bestimmung des Drehwinkels direkt erfolgen, insbesondere erfolgt sie jedoch indirekt, indem ein aus einer mechanische Übersetzung der Bewegung des Bremsbalkens resultierender Winkel gemessen wird, aus dem sich der Drehwinkel des Bremsbalkens anschließend mittels einer bekannten Berechnungsvorschrift bestimmen lässt. Der Drehwinkelsensor kann zudem mit einer elektronischen Steuereinheit der Baumaschine verbunden sein, so dass die über den Drehwinkelsensor gewonnenen Daten zur Drehung des Bremsbalkens auch in Steuerprogrammen der Baumaschine genutzt werden können.

Gemäß einer weiteren bevorzugten Ausführungsform der Erfindung weist der Fahrersitz mindestens eines der folgenden Merkmale auf: der Fahrersitz ist als ein, insbesondere um eine vertikale Drehachse, drehbarer Fahrersitz ausgebildet, der Fahrersitz ist als seitenverschiebbarer Fahrersitz ausgebildet, der Fahrersitz ist auf einem seitenverschiebbaren Sitzträger angeordnet, oder der Fahrersitz ist gegenüber dem Bremsbalken so angeordnet, dass sich der Bremsbalken für den sitzenden Maschinenführer innerhalb des Bequemlichkeitsbereiches befindet, den die Norm DIN EN ISO 6682:2009-06 für fußbedienbare Stellteile in Erdbaumaschinen definiert. Mit anderen Worten ist es ein Kerngedanke dieser Ausführungsform der Erfindung, dass der Fahrersitz in seiner Positionierung möglichst flexibel ist, so dass nur ein einziger, insbesondere zwischen den Seitenbedienpositionen verstellbarer, Fahrersitz benötigt wird und auf einen zweiten Fahrersitz verzichtet werden kann.

Die Erfindung lässt sich bei der Auslegung eines Fahrstandes ferner besonders bevorzugt mit den in den Veröffentlichungen DE102010035270A1 und DE 10 2007 018 744 A1 offenbarten Systemen kombinieren, die hiermit in Bezug genommen werden.

Die vorstehend beschriebene erfindungsgemäße Bremsanordnung ist vorzugsweise Teil eines übergeordneten Bremssystems der Baumaschine. Die erfindungsgemäße Bremsanordnung ist dabei als Betriebsbremse ausgebildet, insbesondere wirkend als Scheibenbremse, Trommelbremse oder Lamellenbremse. Das Bremssystem umfasst ergänzend hierzu eine zweite Bremsanordnung, die insbesondere als hydrostatische Bremsanordnung ausgebildet ist. Vorzugsweise lassen sich die Bremswirkung der Bremsanordnung und die Bremswirkung der zweiten Bremsanordnung mittels des Bremssystems zu einer gemeinsamen Bremswirkung kombinieren. Dies kann in einer Weise erfolgen, die dem Fachmann aus dem Stand der Technik grundsätzlich bekannt ist.

Die erfindungsgemäße Bremsanordnung mit einem Bremsbalken eignet sich besonders Baumaschinen, insbesondere für Straßenfertiger oder für Bodenverdichter, speziell Gummiradwalzen. Diese Baumaschinen erfordern einerseits häufige Bremsbetätigungen und andererseits eine regelmäßige Bedienung von verschiedenen Seiten des Fahrstandes aus.

Nachstehend wird die Erfindung anhand der in den Figuren angegebenen Ausführungsbeispiele näher erläutert. Es zeigen schematisch:
- Fig. 1a: eine Seitenansicht einer Gummiradwalze;
- Fig. 1b: eine Seitenansicht eines Straßenfertigers;
- Fig. 2: eine perspektivische Ansicht des Fahrstandes einer erfindungsgemäßen Baumaschine;
- Fig. 3a bis 3c: jeweils Draufsichten auf den Fahrstand einer erfindungsgemäßen Baumaschine mit unterschiedlicher Anordnung eines Fahrersitzes,
- Fig. 4: eine Seitenansicht auf den Fahrstand einer erfindungsgemäßen Baumaschine mit nicht betätigtem Bremsbalken, wobei der Bereich des Bremsbalkens und des Aktuators besonders hervorgehoben ist;
- Fig. 5: eine Seitenansicht des Fahrstands einer erfindungsgemäßen Baumaschine, wobei der Bremsbalken betätigt ist und der Bereich des Bremsbalkens und des Aktuators besonders hervorgehoben ist.
- Fig. 6: eine perspektivische Ansicht der Unterseite der Betätigungsvorrichtung einer erfindungsgemäßen Baumaschine, wobei insbesondere der Bereich des Bremsbalkens und des Aktuators dargestellt ist.

Gleiche Bauteile sind in den Figuren mit gleichen Bezugszeichen angegeben, wobei nicht jedes sich in den Figuren wiederholende Bauteil durchgehend separat bezeichnet sein muss.

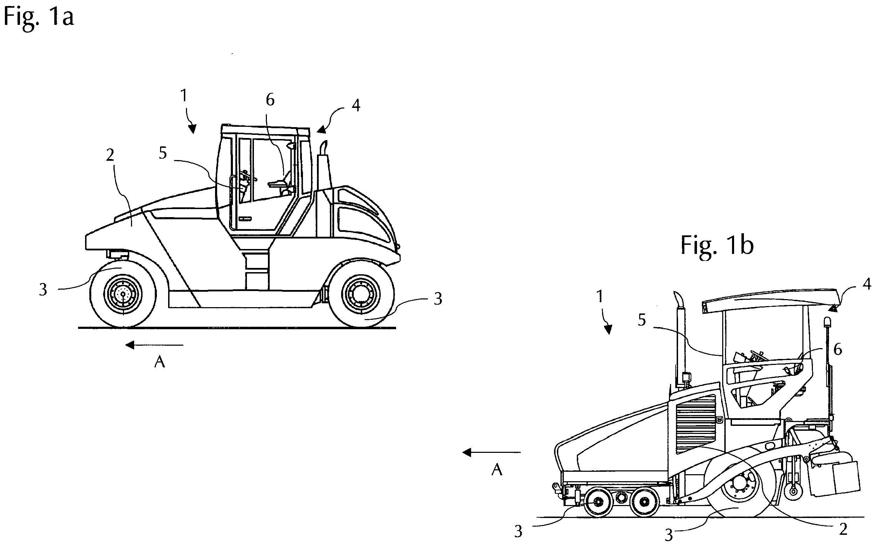

Figur 1a zeigt eine Seitenansicht auf eine Baumaschine 1, genauer eine Gummiradwalze. Die Baumaschine 1 umfasst einen Maschinenrahmen 2 und zwei Fahrwerke 3, die jeweils mehrere Gummiräder zur Verdichtung des Bodenuntergrundes umfassen. Gleichzeitig dienen die Fahrwerke 3 auch der Fortbewegung der Baumaschine 1. Im Arbeitsbetrieb bewegt sich die Baumaschine mithilfe der Fahrwerke 3 in Arbeitsrichtung A fort und verdichtet dabei den Bodenuntergrund, indem sie über die Gummiräder mit ihrem Eigengewicht auf diesen einwirkt. Zur Bedienung der Baumaschine 1 ist weiterhin ein Fahrstand 4 für den Maschinenführer vorgesehen, der eine Bedienkonsole 5 und einen Fahrersitz 6 umfasst.

Figur 1b veranschaulicht den grundsätzlichen Aufbau einer weiteren Baumaschine 1, die prädestiniert für den Einsatz der Erfindung ist. Konkret handelt es sich um einen Straßenfertiger mit einem Fahrstand 4, auf dem zur Maschinenbedienung ebenfalls eine Bedienkonsole 5 und ein Fahrersitz 6 angeordnet sind. Der Straßenfertiger weist als Fahreinrichtung mehrere Räder 3 auf, wobei hier auch Kettenlaufwerke Verwendung finden können.

Beiden in den Figuren 1a und 1b gezeigten Baumaschinen 1 gemein ist, dass der auf dem Fahrstand 4 befindliche Bediener je nach aktueller Arbeitssituation häufig entweder die rechte oder die linke Seite der Maschine einsehen muss, beispielsweise beim Entlangfahren der Maschine an Kanten oder sonstigen Hindernissen. Hierzu ist der Fahrersitz 6 derart angeordnet, dass er von einer rechten Seitenbedienposition, aus der heraus der Fahrer die rechte Maschinenseite einsehen kann, in eine linke Seitenbedienposition, aus der heraus der Fahrer die linke Maschinenseite einsehen kann, verstellbar ist. Eine Einrichtung, die eine derartige Verstellbarkeit ermöglicht, ist beispielsweise in den beiden veröffentlichten Patentanmeldungen DE102010035270A1 und DE 10 2007 018 744 A1 der Anmelderin offenbart, die hiermit ausdrücklich in Bezug genommen werden.

Die nachfolgenden Figuren verdeutlichen weitere Details zum Aufbau des Fahrstandes und zur Funktionsweise der Erfindung.

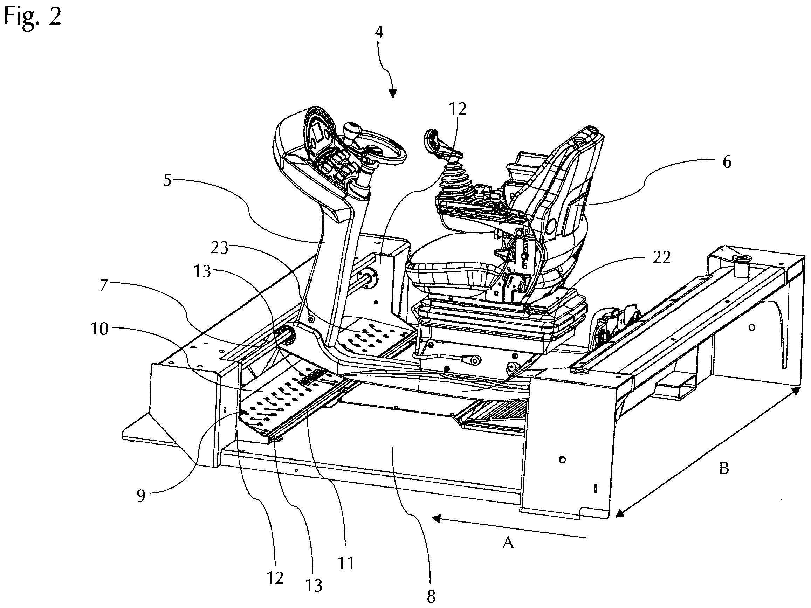

Einen Überblick über die konkrete Ausgestaltung des Fahrstandes 4 gibt zunächst Figur 2 aus einer perspektivischen Ansicht wieder. Der Fahrersitz 6 ist auf einem Sitzträger 22 angeordnet, der mit einem Träger für die dem Fahrersitz 6 gegenüber angeordnete Bedienkonsole 5 ausgebildet ist. Mithilfe des Sitzträgers 22 lassen sich der Fahrersitz 6 und die Bedienkonsole 5 gemeinsam entlang einer Führungsschiene 7, vergleichbar einem Schlitten, zwischen den Außenseiten des Fahrstandes 4 parallel hin- und her bewegen, quer zur Arbeitsrichtung bzw. Vorwärtsrichtung A der Baumaschine 1. Zusätzlich zu dieser Verstellung der Sitzposition kann der Fahrersitz 6 am Sitzträger 22 noch feinjustiert werden, beispielsweise hinsichtlich Höhe, Vorne-Hinten-Position und Seitenposition. Über diese Verstellung ist aber nur eine Verstellung im Bereich weniger Zentimeter möglich, wohingegen die Verstellung über die Führungsschiene über nahezu die gesamte Breite B des Fahrstandes bzw. des Fahrstandbodens 8 möglich ist. Der Fahrstandboden 8 bildet die untere Begrenzung des Fahrstandes 4.

Am Fahrstandboden 8 ist, gegenüber dem Fahrersitz 6 und für den Maschinenführer mit dem Fuß bequem erreichbar, der Bremsbalken 10 angeordnet, der Teil einer Betätigungsvorrichtung 9 zur Betätigung einer Bremsanordnung der Baumaschine 1 ist. Der Bremsbalken 10 ist auf einer dem Fahrersitz 6 zugewandten Seite mit mehreren Gelenken, insbesondere Drehgelenken, im vorliegenden Ausführungsbeispiel beispielhaft parallel zueinander angeordnete Scharniere 13, an dem Fahrstandboden 8 gelagert, so dass er entlang dieser Scharniere 13 mit einem Freiheitsgrad um eine horizontal und quer Arbeitsrichtung orientiert Achse geschwenkt werden kann. Mit anderen Worten kann der Bremsbalken 10 also entlang der Scharniere 13 hoch- und herunter geklappt werden. Der Bremsbalken 10 ist entlang der Scharniere 13 zwischen einer voll betätigten Position und einer Ruheposition verschwenkbar, wobei Ruheposition und voll betätigte Position jeweils durch einen Anschlag des Bremsbalkens 10 definiert werden.

Eine zum Fahrersitz 6 weisende Oberfläche des Bremsbalkens 10 ist weiterhin als Betätigungsfläche 23 ausgebildet. Die Betätigung des Bremsbalkens 10 erfolgt auf die Weise, dass der Maschinenführer mit dem Fuß den Bremsbalken 10 belastet, der daraufhin um die Drehachsen der Scharniere 13 nach unten klappt. Die Scharniere 13 befinden sich auch in dem Bereich, der für die Fußbetätigung durch den Maschinenführer vorgesehen ist. Aus diesem Grund wird der Bremsbalken 10 zur Fahrerseite hin durch einen Gelenk- oder Scharnierschutz, im vorliegenden Ausführungsbeispiel als abgekantete Schutzleiste 11 ausgebildet, abgeschlossen. Diese Schutzleiste 11 verdeckt die Scharniere 13 und schützt diese somit vor mechanischer Beeinträchtigung durch den Maschinenführer sowie vor Verschmutzung. Zu den Seiten des Fahrstandes 4 hin wird die Betätigungsvorrichtung 9 jeweils durch einen Seitenschutz 12 abgeschlossen, der einen Hohlraum 20 unterhalb des Bremsbalkens 10 zur Seite hin abgrenzt. Auf diese Weise dient auch der Seitenschutz 12 dazu, die Betätigungsvorrichtung 9 insgesamt vor dem Eindringen von Schmutz oder unabsichtlicher mechanischer Beeinträchtigung zu schützen. Dies ist besonders daher relevant, da auch der Aktuator 15 für den Bremsbalken 10 in dem Hohlraum 20 unterhalb des Bremsbalkens 10 angeordnet ist, und somit ebenfalls geschützt ist. Der Hohlraum 20 und der Aktuator 15 sind jedoch in Figur 2 nicht dargestellt, da sie aus der gewählten Perspektive durch den Bremsbalken 10 verdeckt werden. Bei dem Seitenschutz 12 handelt es sich im vorliegenden Ausführungsbeispiel um ein von Fahrstandboden aufragendes Schutzblech, wobei hier auch im Umfang der Erfindung auf andere Alternativen zurückgegriffen werden kann, wie beispielsweise Schutzmatten, Balge etc. Wesentlich ist, dass der unter dem Bremsbalken 10 liegende Hohlraum 20 nach außen hin bzw. durch den Seitenschutz 12 zu den Seiten hin abgedeckt wird.

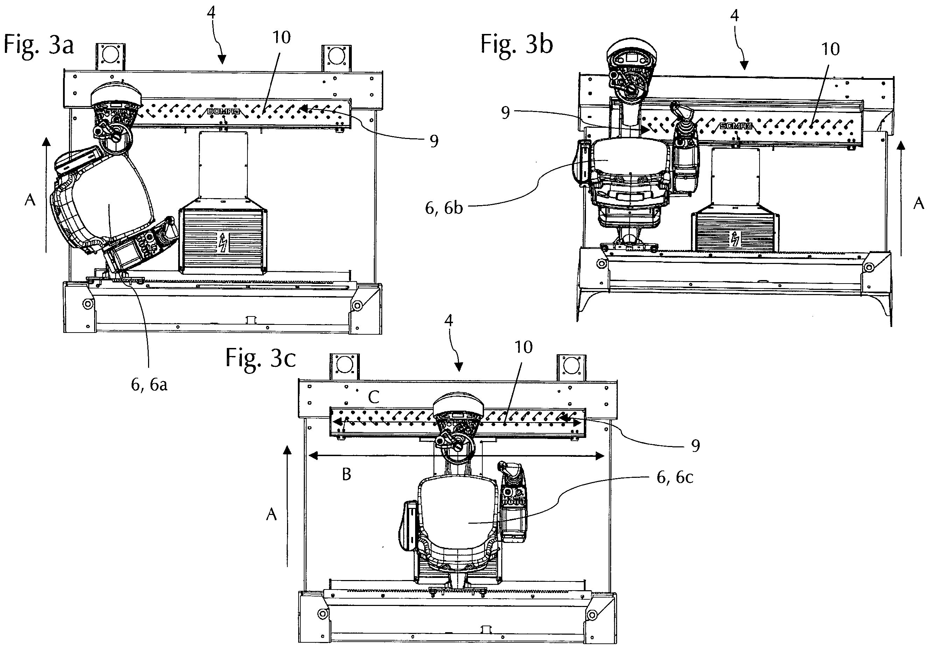

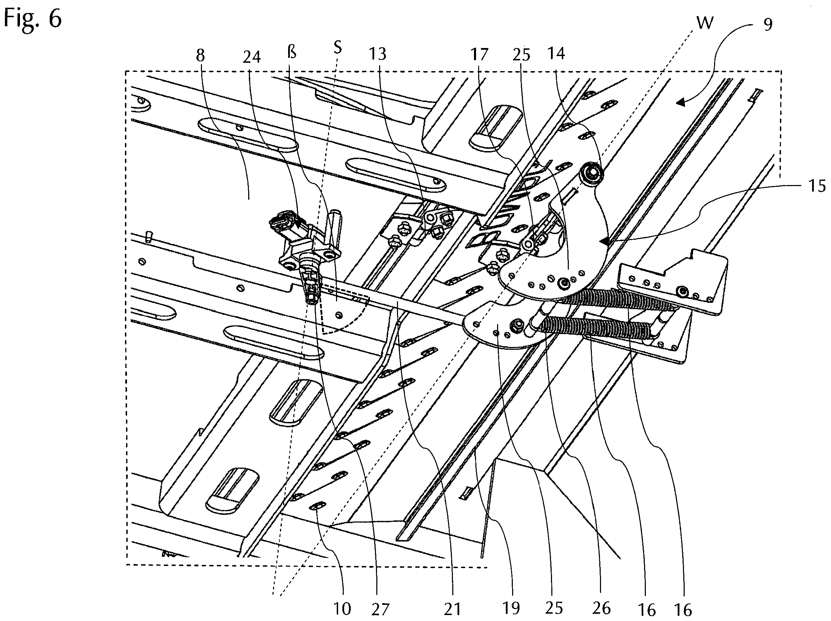

Die Figuren 3a bis 3c zeigen den Fahrstand 4 jeweils aus einer Draufsicht bei unterschiedlicher Positionierung des Fahrersitzes 6, der hier verschiedene Bedienpositionen 6a, 6b, 6c einnimmt. Aus den Figuren 3a bis 3c lässt sich insbesondere erkennen, dass sich der Fahrersitz 6 sowohl zu den Seiten des Fahrstandes 4 hin verschieben lässt, also horizontal und quer zur Arbeitsrichtung A, sowie auch um eine senkrechte Achse drehbar gelagert ist. Die Bedienpositionen 6a, 6b und 6c stellen dabei nur einige beispielhafte Positionen aus einer weitaus größeren Zahl möglicher Bedienpositionen dar, die der Fahrersitz 6 einnehmen kann, der im vorliegenden Ausführungsbeispiel im Wesentlichen stufenlos zwischen seinen beiden äußeren Seitenbedienpositionen verstellt werden, wobei in den Figuren 6a und 6c jeweils die linke Seitenbedienposition mit verdrehtem Fahrersitz erkennbar ist. Ebenso ist vorliegend beispielsweise eine Verschiebung des Fahrersitzes 6 auf die in Arbeitsrichtung rechte Seite des Fahrstandes 4 möglich (entsprechend der rechten Seitenbedienposition), oder eine Verdrehung des Fahrersitzes 6 auf einer im Fahrstand 4 zentralen Position.

Der Bremsbalken 10 kann aufgrund seiner zentralen Anordnung im Fahrstand 4 und seiner ergonomischen Form von allen vorgesehenen Bedienpositionen aus durch den Maschinenführer mit dem Fuß betätigt werden und ist bequem erreichbar. Die Flexibilität in der Positionierung des Fahrersitzes 6 kann somit durch den Maschinenführer voll ausgenutzt werden; er ist nicht, wie bei den aus dem Stand der Technik bekannten Anordnungen, durch speziell zugeordnete, eingeschränkt erreichbare Fußbedieneinrichtungen, auf eine geringe Zahl tatsächlich möglicher Bedienpositionen beschränkt. Der Bremsbalken ist dazu als ein mit seiner Längerstreckung quer zur Arbeitsrichtung A horizontal orientiertes balkenförmiges Element ausgebildet, das im Wesentlichen die Oberfläche eines Rechtsecks aufweist, wobei die Längskanten erheblich, d.h. vorliegend vorzugsweise wenigstens um den Faktor 5, länger als die seitlichen Stirnseiten ausgebildet sind. Der Bremsbalken erstreckt sich mit seiner Breite C ferner über ca. 80% der Breite B des Fahrstandes und verläuft damit durchgehend über einen wesentlichen Teil des Fahrstandes. Dies gewährleistet, dass der Fahrer vom Fahrersitz aus den Bremsbalken auch aus unterschiedlichsten Verstellpositionen des Fahrersitzes heraus erreichen kann.

Ferner ist der Bremsbalken mit seiner zum Fahrer weisenden Oberfläche über seine gesamte Breite (Orientierung quer zur Arbeitsrichtung) im Wesentlichen durchgängig und gleichförmig ausgebildet, um die gleichen Bedienbedingungen über die gesamte Breite des Bremsbalkens zu ermöglichen. Durchgängig ist dabei derart zu verstehen, dass die Oberfläche nicht zwingend geschlossen ausgebildet sein muss (wobei dies bevorzugt ist), sondern eine für den Fuß des Bedieners durchgängige Bedienoberfläche bildet.

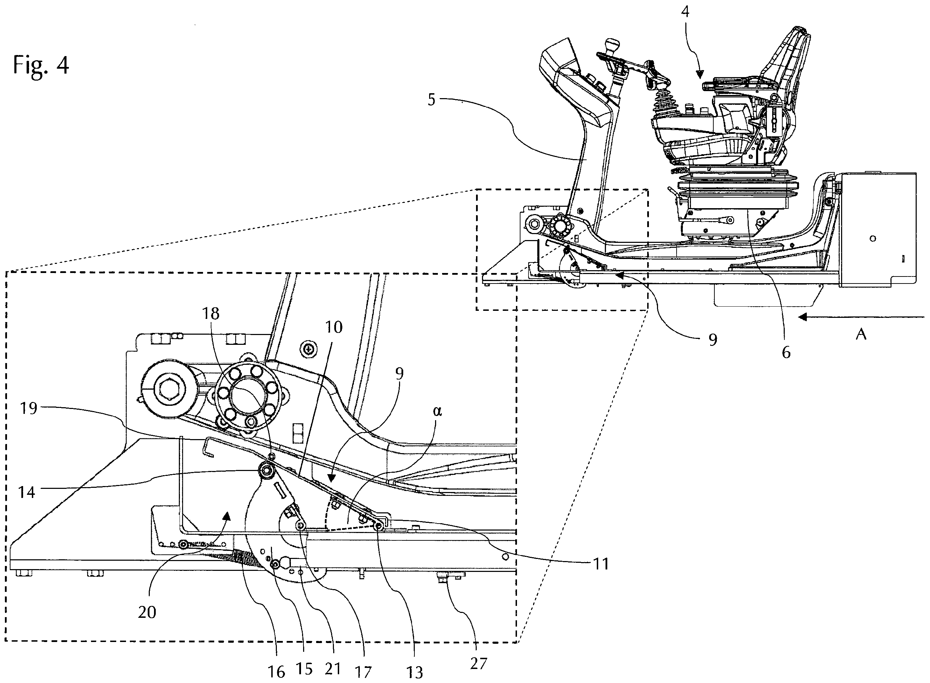

In Figur 4 ist der Fahrstand 4 aus einer Seitenansicht gezeigt. Insbesondere ist dabei derjenige Bereich hervorgehoben, in dem auch die Betätigungsvorrichtung 9 mit dem Bremsbalken 10 angeordnet ist. Um einen besseren Einblick in die Mechanik der Betätigungsvorrichtung 9 zu ermöglichen, wurde zudem auf die Darstellung der Seitenverkleidung 12 verzichtet. Der Bremsbalken 10 ist über das Scharnier 13 direkt und unmittelbar an dem Fahrstandboden 8 gelagert, und bildet mit diesem den Drehwinkel a. Das Scharnier 13 wird hierbei nach oben und zum Fahrersitz 6 hin durch die Schutzleiste 11 geschützt. An der dem Fahrersitz gegenüberliegenden Seite des Bremsbalkens 10 befindet sich eine zweifach um 90 Grad abgebogene Kante 19, so dass der Bremsbalken 10 in diesem Bereich ein U-förmiges Profil aufweist. Wie auch die Seitenverkleidung 12 dient diese Kante dazu, den Hohlraum 20 unterhalb des Bremsbalkens 10 abzugrenzen und vor Beeinträchtigung, beispielsweise durch Schmutz, zu schützen. Zugleich bildet die doppelt abgebogene Kante 19 eine Auflage- bzw. Anschlagfläche für den Bremsbalken 10 auf dem Fahrstandboden 8.

In dem Hohlraum 20 unterhalb des Bremsbalkens 10 ist auch der Aktuator 15 angeordnet, der in dieser Perspektive zu sehen ist. Der Bremsbalken 10 liegt mit seinem Eigengewicht auf einer Rolle 14 auf, die Teil des Aktuators 15 ist. Der Freiheitsgrad des Aktuators 15 wird hierbei durch ein weiteres Scharnier 17 bestimmt. Zur Rückstellung des Bremsbalkens 10 in eine Ruheposition ist der Aktuator 15 mit einer Rückstellfeder 16 beaufschlagt. Durch den Zug der Feder 16 wird der Aktuator 15 nach oben gedrückt und hebt dabei den Bremsbalken 10 in Richtung seiner Ruheposition an. Die Aufwärtsbewegung des Bremsbalkens 10 wird dabei durch einen oberhalb und über den Bremsbalken 10 vorstehenden Anschlagzapfen 18 begrenzt. In der in Figur 4 dargestellten Ruheposition des Bremsbalkens 10 drückt also die Rückstellfeder 16 über den Aktuator 15 den Bremsbalken 10 gegen den Anschlagzapfen 18.

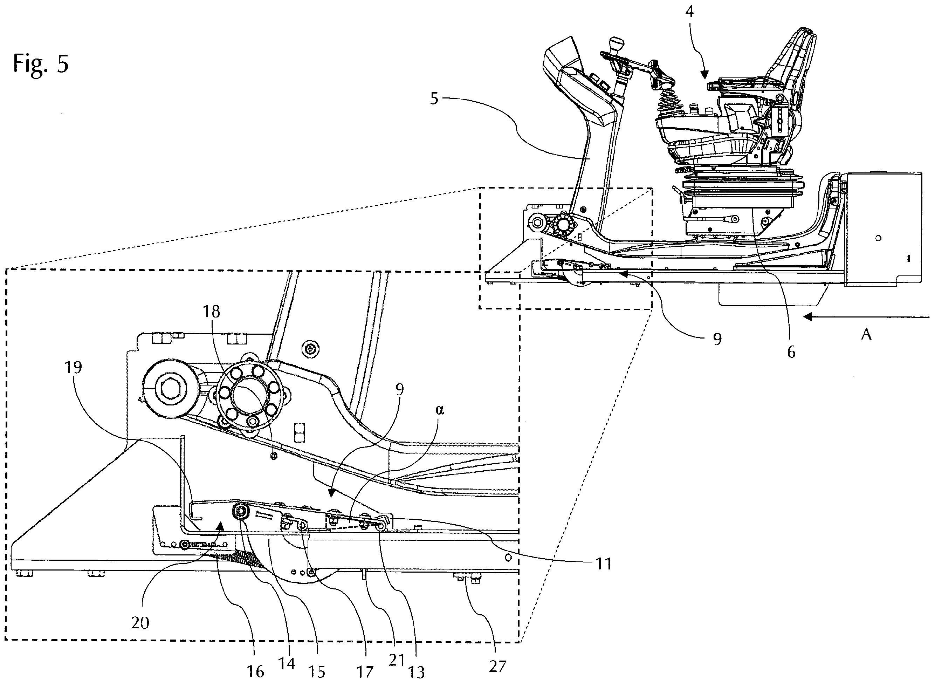

Die Figur 5 stellt im Wesentlichen dieselben Bereiche dar wie Figur 4, mit dem Unterschied, dass der Bremsbalken 10 hier in einer voll betätigten Position gezeigt wird, die beispielsweise bei einer Fußbetätigung durch den Maschinenführer eintreten kann. Wird die Betätigungsfläche 23 durch den Fuß des Maschinenführers herabgedrückt, schwenkt der Bremsbalken 10 an dem Scharnier 13 herunter. Durch den heruntergedrückten Bremsbalken 10 wird auch der Aktuator 15 nach unten gedrückt und klappt seinerseits an dem Scharnier 17 herunter. Dadurch wird die Rückstellfeder 16 zusätzlich gespannt, so dass sich die wirkende Federkraft erhöht, die den Bremsbalken 10 nach oben drückt. Allerdings ist dem Drehwinkel α eine Grenze gesetzt, weil bei zu großer Krafteinwirkung durch den Maschinenführer der Bremsbalken 10 mit seiner Unterseite, insbesondere der umgebogenen Kante 19, anschlägt. Diese im Vergleich zur Ruheposition der Figur 4 maximal ausgelenkte Position des Bremsbalkens 10 ist in Figur 5 dargestellt.

Die Figur 6 zeigt die Betätigungsvorrichtung 9 von unten und gibt dabei insbesondere den Bereich des Aktuators 15 wieder. Um den Aktuator 15 besser sichtbar zu machen, wurde auf die Darstellung des Fahrstandbodens 8 in diesem Bereich verzichtet. Der Aktuator 15 umfasst zwei parallel angeordnete, gekrümmte Scheiben 25, die durch eine Achse 26 und ein Scharnier 17 verbunden sind. Die Scheiben 25 sind von halbkreisringförmiger Geometrie, wobei der Kreismittelpunkt auf der verlängerten Drehachse W des Scharniers 17 liegt. Am oberen Ende der Scheiben 25 sitzt jeweils eine Rolle 14, auf der der Bremsbalken 10 aufliegt. Die Achse 26 liegt, in Bezug auf die halbkreisringförmige Geometrie der Scheiben 25, den Rollen 14 im Wesentlichen gegenüber. Sie ist mit den Rückstellfedern 16 beaufschlagt, die von der Achse 26 aus betrachtet hinter den Rollen 14, relativ zum Fahrstandboden 8 fixiert sind. Auf diese Weise wirkt der Zug der Rückstellfedern 16 an der Achse 26 entgegengesetzt zu der Belastung der Rollen 24 durch das Gewicht des Bremsbalkens 10 und insbesondere durch eine Fußbetätigung des Bremsbalkens 10. Der Aktuator 15 bildet somit eine Bremswippe um das Scharnier 17 bzw. die Drehachse W, auf deren eine Seite die Kraft der Rückstellfedern 16 wirkt, während auf die andere Seite die Gewichtskraft des Bremsbalkens 10 und die durch den Maschinenführer aufgebrachte Gewichtskraft wirken. Die Drehachse der Rolle 24 und die Schwenkachse des Bremsbalkens 10 verlaufen parallel zueinander. Bei einer Betätigung des Bremsbalkens 10 rollt die Rolle 24 somit auf der Innenseite des Bremsbalkens ab.

An den parallelen Scheiben 25 ist einseitig ein Hebel 21 angeordnet, der den Aktuator 15 mit einem Drehwinkelsensor 24 verbindet. Der Hebel 21 ist dabei über ein Gelenk mit der Scheibe 25 verbunden, so dass er an diesem Gelenk relativ zur Scheibe 25 sowohl nach oben oder unten rotieren kann, also parallel zur Ausdehnung der Scheibe 25, wie auch nach links und rechts, also senkrecht zur Ausdehnung der Scheibe 25. Wird der Bremsbalken 10 entlang des Scharniers 13 heruntergeklappt, dann rotiert der Aktuator 15 um das Scharnier 17 und schiebt dabei den Hebel 21 in Richtung des Drehwinkelsensors 25. Da der Schaft 27 des Drehwinkelsensors 24, an dem der Hebel 21 auf der Gegenseite gelagert ist, um eine Achse S rotierbar gelagert ist, die senkrecht zu der Rotationsachse W des Aktuators 15 verläuft, bewirkt die Rotation des Aktuators 15 im Uhrzeigersinn, dass der Hebel 21 den Schaft 27 um die Achse S in Richtung vom Aktuator 15 weg rotiert. Dabei klappt der Hebel 21 an dem Gelenk, von der Scheibe 25 aus betrachtet, nach außen. Diese Bewegung wird beispielsweise durch die Betätigung des Bremsbalkens 10 bewirkt. Eine Rotation des Aktuators 15 gegen den Uhrzeigersinn bewirkt hingegen, dass der Hebel 21 zur Scheibe 25 nach innen klappt und der Schaft 27 um die Achse S in Richtung des Aktuators 15 rotiert wird. Diese Bewegung wird beispielsweise durch das Rückstellen des Bremsbalkens 10 mittels der Rückstellfedern 16 bewirkt. In beiden Fällen verändert sich jeweils zugleich der Drehwinkel ß des Schafts 27 des Drehwinkelsensors 24. Der Drehwinkel α des Bremsbalkens 10 wird somit über den Aktuator 15 und den Hebel 21 in den Drehwinkel β des Schafts 27 des Drehwinkelsensors 24 übersetzt, der dann vom Drehwinkelsensor 24 gemessen wird und anschließend informationstechnisch weiterverarbeitet wird, um die Bremsanordnung zu steuern.

## Patentansprüche

1. Baumaschine (1), umfassend
eine Bremsanordnung zum Bremsen der Baumaschine und
einen Fahrstand (4) mit mindestens einem Fahrersitz (6), der wenigstens zwischen zwei einander gegenüberliegenden Seitenbedienpositionen (6a, 6b, 6c) für einen Maschinenführer verstellbar ist, und mit einer Betätigungsvorrichtung (9) zur Fußbetätigung der Bremsanordnung,
**dadurch gekennzeichnet,**
**dass** die Betätigungsvorrichtung (9) für die Bremsanordnung einen Bremsbalken (10) umfasst, der sich quer zu einer Arbeitsrichtung (A) der Baumaschine (1) im Fahrstand (4) erstreckt und von den zwei Seitenbedienpositionen (6a, 6b, 6c) aus fußbedienbar ist,
und **dass** die Betätigungsvorrichtung (9) einen Aktuator (15) für den Bremsbalken (10) umfasst, der unterhalb des Bremsbalkens (10) angeordnet ist.

2. Baumaschine (1) gemäß Anspruch 1,
**dadurch gekennzeichnet,**
**dass** eine dem Fahrersitz (6) zugewandte Oberfläche des Bremsbalkens (10) als durchgehende Betätigungsfläche (23) ausgebildet ist, wobei die Betätigungsfläche (23) insbesondere einen Antirutschbelag umfasst.

3. Baumaschine (1) gemäß einem der vorhergehenden Ansprüche,
**dadurch gekennzeichnet,**
**dass** der Fahrstand (4) einen Fahrstandboden (8) umfasst, und dass der Bremsbalken (10) über ein insbesondere als Scharnier (13) ausgebildetes Gelenk, insbesondere über mehrere Gelenke oder Scharniere (13), drehbar an dem Fahrstandboden (8) gelagert ist, insbesondere an einer dem Fahrersitz (6) zugewandten Kante.

4. Baumaschine (1) gemäß Anspruch 3,
**dadurch gekennzeichnet,**
**dass** die Betätigungsvorrichtung (9) einen Gelenk- oder Scharnierschutz umfasst, der oberhalb des Gelenks (13) angeordnet ist, und der insbesondere als abgekantete Schutzleiste (11) entlang der gesamten dem Fahrersitz (6) zugewandten Kante des Bremsbalkens (10) ausgebildet ist.

5. Baumaschine (1) gemäß einem der vorhergehenden Ansprüche,
**dadurch gekennzeichnet,**
**dass** eine dem Fahrersitz (6) abgewandte Kante (19) des Bremsbalkens (10) nach unten hin umgebogen ist.

6. Baumaschine (1) gemäß einem der vorhergehenden Ansprüche,
**dadurch gekennzeichnet,**
**dass** eine Übertragungsmechanik für den Aktuator (15) vorhanden ist, wobei die Übertragungsmechanik durch den Bremsbalken (10) und den Fahrstandboden (8) im Bereich des Fahrstandes (4) nach oben hin vollständig abgedeckt wird.

7. Baumaschine (1) gemäß einem der vorhergehenden Ansprüche,
**dadurch gekennzeichnet,**
**dass** die Betätigungsvorrichtung (9) eine Rückstellfeder (16) umfasst, wobei vorzugsweise der Aktuator (15) mit der Rückstellfeder (16) derart beaufschlagt ist, dass bei Nichtbetätigung des Bremsbalkens (10) dieser durch die Rückstellfeder (16) selbsttätig in eine Ruheposition zurückgestellt wird, und wobei die Rückstellfeder (16) insbesondere unterhalb des Bremsbalkens (10) angeordnet ist.

8. Baumaschine (1) gemäß Anspruch 7,
**dadurch gekennzeichnet,**
**dass** die Betätigungsvorrichtung (9) einen Federbruchsensor umfasst, der dazu ausgebildet ist, einen Federbruch der Rückstellfeder (16) des Bremsbalkens (10) zu detektieren, wobei der Federbruchsensor insbesondere unterhalb des Bremsbalkens (10) angeordnet ist.

9. Baumaschine (1) gemäß einem der vorhergehenden Ansprüche,
**dadurch gekennzeichnet,**
**dass** der Aktuator (15), bezogen auf die Ausdehnung des Bremsbalkens (10) entlang einer Längsmittelachse des Bremsbalkens (10), mittig angeordnet ist.

10. Baumaschine (1) gemäß einem der vorhergehenden Ansprüche,
**dadurch gekennzeichnet,**
**dass** der Aktuator (15) eine Rolle (14) umfasst, über die der Bremsbalken (10) auf dem Aktuator (15) aufliegt, insbesondere derart, dass die Unterseite des Bremsbalkens (10) eine Abrollfläche für die Rolle (14) bildet.

11. Baumaschine (1) gemäß einem der vorhergehenden Ansprüche,
**dadurch gekennzeichnet,**
**dass** der Aktuator (15) des Bremsbalkens (10) als eine Bremswippe ausgebildet ist, wobei die Bremswippe so angeordnet ist, dass sie entlang einer Achse (W) zwischen einer maximal betätigten Position und einer nicht betätigten Position drehbar ist.

12. Baumaschine (1) gemäß einem der vorhergehenden Ansprüche,
**dadurch gekennzeichnet,**
**dass** der Aktuator (15) des Bremsbalkens (10) mechanisch mit einem elektrischen, hydraulischen oder pneumatischen Bremsventil verbunden ist.

13. Baumaschine (1) gemäß einem der vorhergehenden Ansprüche,
**dadurch gekennzeichnet,**
**dass** die Betätigungsvorrichtung (9) einen Seitenschutz (12) umfasst, der an einer dem Fahrersitz (6) abgewandten Seite des Bremsbalkens (10) angeordnet ist und dazu ausgebildet ist, einen Hohlraum (20) unterhalb des Bremsbalkens (10) zur dieser Seite hin abzudichten.

14. Baumaschine (1) gemäß einem der vorhergehenden Ansprüche,
**dadurch gekennzeichnet,**
**dass** die Betätigungsvorrichtung (9) einen Drehwinkelsensor (24) umfasst, der unterhalb des Bremsbalkens oder unterhalb des Fahrstandbodens angeordnet ist und insbesondere dazu ausgebildet ist, einen Drehwinkel (a) des Bremsbalkens (10) zu bestimmen.

15. Baumaschine (1) gemäß einem der vorhergehenden Ansprüche,
dadurch **gekennzeichne**t,
dass die Bremsanordnung Teil eines Bremssystems der Baumaschine (1) ist und als Betriebsbremse ausgebildet ist, insbesondere als Scheibenbremse, Trommelbremse oder Lamellenbremse, und wobei das Bremssystem eine zweite Bremsanordnung umfasst, die insbesondere als hydrostatische Bremsanordnung ausgebildet ist.

16. Baumaschine (1) gemäß einem der vorhergehenden Ansprüche,
**dadurch gekennzeichnet,**
**dass** der Fahrersitz (6) mindestens eines der folgenden Merkmale aufweist:
- der Fahrersitz (6) ist als drehbarer Fahrersitz (6) ausgebildet,
- der Fahrersitz (6) ist als seitenverschiebbarer Fahrersitz (6) ausgebildet,
- der Fahrersitz (6) ist auf einem seitenverschiebbaren Sitzträger (22) angeordnet, oder
- der Fahrersitz (1) ist gegenüber dem Bremsbalken (10) so angeordnet, dass der Bremsbalken (10) sich für den sitzenden Maschinenführer innerhalb des Bequemlichkeitsbereiches befindet, den die Norm DIN EN ISO 6682:2009-06 für fußbedienbare Stellteile in Erdbaumaschinen definiert.

17. Baumaschine (1) gemäß einem der vorhergehenden Ansprüche,
**dadurch gekennzeichnet,**
**dass** die Baumaschine (1) als Straßenfertiger oder als Bodenverdichter, insbesondere als Gummiradwalze (1a), ausgebildet ist.

## Claims

1. Construction machine (1), comprising
a brake assembly for braking the construction machine, and
an operator platform (4) comprising at least one operator seat (6) that can be adjusted between at least two opposite side operating positions (6a, 6b, 6c) for a machine operator, and an actuation device (9) for foot actuation of the brake assembly,
**characterized in that**
the actuation device (9) for the brake assembly comprises a brake beam (10) which extends transversely to a working direction (A) of the construction machine (1) on the operator platform (4) and can be operated by foot from the two side operating positions (6a, 6b, 6c),
and that the actuation device (9) comprises an actuator (15) for the brake beam (10) which is arranged below the brake beam (10).

2. The construction machine (1) according to claim 1,
**characterized in that**
a surface of the brake beam (10) facing the operator seat (6) is configured as a continuous actuation surface (23), the actuation surface (23) particularly comprising an anti-slip coating.

3. The construction machine (1) according to any one of the preceding claims,
**characterized in that**
the operator platform (4) includes an operator platform base (8), and that the brake beam (10) is pivotally mounted on the platform base (8), in particular with an edge facing the operator seat (6), via a joint particularly formed as a hinge (13), in particular via multiple joints or hinges (13).

4. The construction machine (1) according to claim 3,
**characterized in that**
the actuation device (9) comprises a joint or hinge protection which is arranged above the joint (13) and which is in particular configured as a chamfered protection strip (11) along the entire edge of the brake beam (10) facing the operator seat (6).

5. The construction machine (1) according to any one of the preceding claims,
**characterized in that**
an edge (19) of the brake beam (10) facing away from the operator seat (6) is bent downward.

6. The construction machine (1) according to any one of the preceding claims,
**characterized in that**
a transmission mechanism for the actuator (15) is provided, said transmission mechanism being entirely covered upward by the brake beam (10) and the platform base (8) in the region of the operator platform (4)

7. The construction machine (1) according to any one of the preceding claims,
**characterized in that**
the actuation device (9) comprises a return spring (16), and the actuator (15) is preferably loaded by the return spring (16) in such a way that if the brake beam (10) is not actuated, the brake beam is automatically returned to a rest position by means of the return spring (16), the return spring (16) being arranged in particular below the brake beam (10).

8. The construction machine (1) according to claim 7,
**characterized in that**
the actuation device (9) comprises a spring break sensor which is configured to detect a spring break of the return spring (16) of the brake beam (10), the spring break sensor being arranged in particular below the brake beam (10).

9. The construction machine (1) according to any one of the preceding claims,
**characterized in that**
the actuator (15) is centrally arranged with respect to an extension of the brake beam (10) along a longitudinal central axis of the brake beam (10).

10. The construction machine (1) according to any one of the preceding claims,
**characterized in that**
the actuator (15) comprises a roller (14) via which the brake beam (10) rests on the actuator (15), in particular such that the lower side of the brake beam (10) forms a rolling surface for the roller (14).

11. The construction machine (1) according to any one of the preceding claims,
**characterized in that**
the actuator (15) of the brake beam (10) is configured as a brake pedal, the brake pedal being arranged such that it is pivotable about an axis (W) between a maximally actuated position and a non-actuated position.

12. The construction machine (1) according to any one of the preceding claims,
**characterized in that**
the actuator (15) of the brake beam (10) is mechanically connected to an electric, hydraulic or pneumatic brake valve.

13. The construction machine (1) according to any one of the preceding claims,
**characterized in that**
the actuation device (9) comprises a side protection (12) which is arranged on a side of the brake beam (10) facing away from the operator seat (6) and is configured to seal a hollow space (20) below the brake beam (10) toward said side.

14. The construction machine (1) according to any one of the preceding claims,
**characterized in that**
the actuation device (9) comprises a rotation angle sensor (24) which is arranged below the brake beam or below the platform base and which is in particular configured to determine a rotation angle (α) of the brake beam (10).

15. The construction machine (1) according to any one of preceding claims,
**characterized in that**
the brake assembly is part of a brake system of the construction machine (1) and is configured as an operating brake, in particular as a disk brake, drum brake or multi-disk brake, the brake system comprising a second brake assembly which is in particular configured as a hydrostatic brake assembly.

16. The construction machine (1) according to any one of the preceding claims,
**characterized in that**
the operator seat (6) comprises at least one of the following features:
- the operator seat (6) is configured as a rotatable operator seat (6),
- the operator seat (6) is configured as a laterally displaceable operator seat (6),
- the operator seat (6) is arranged on a laterally displaceable seat support (22), or
- the operator seat (1) is arranged relative to the brake beam (10) in such a way that the brake beam (10) is located within the comfort region of the seated machine operator, said region defined by the DIN EN ISO 6682:2009-06 standard for foot-actuatable controls in earth moving machines.

17. The construction machine (1) according to any one of the preceding claims,
**characterized in that**
the construction machine (1) is configured as a road finisher or soil compactor, in particular as a rubber-tired roller (1a).

## Revendications

1. Engin (1) de chantier, comprenant
un dispositif de freinage pour freiner l'engin de chantier, et
une plateforme (4) pour l'opérateur comprenant au moins un siège (6) pour l'opérateur qui peut être réglé entre au moins deux positions latérales opposées de fonctionnement (6a, 6b, 6c) pour un opérateur d'engin, et un dispositif d'actionnement (9) destiné à un actionnement au pied du dispositif de freinage,
**caractérisé en ce que**
le dispositif d'actionnement (9) pour le dispositif de freinage comprend une poutre de frein (10) qui s'étend sur la plateforme (4) de l'opérateur de manière transversale à une direction de déplacement (A) de l'engin (1) de chantier et qui peut être opérée avec le pied à partir des deux positions latérales de fonctionnement (6a, 6b, 6c),
et **en ce que** le dispositif d'actionnement (9) comprend un actionneur (15) pour la poutre de frein (10) qui est disposé sous la poutre de frein (10).

2. Engin de chantier (1) selon la revendication 1,
**caractérisé en ce que**
une surface de la poutre de frein (10) faisant face au siège (6) de l'opérateur est configurée en surface d'actionnement continue (23), la surface d'actionnement (23) comprenant en particulier un revêtement antidérapant.

3. Engin de chantier (1) selon l'une quelconque des revendications précédentes,
**caractérisé en ce que**
la plateforme (4) pour l'opérateur comprend une base (8) de plateforme opérateur, et **en ce que** la poutre de frein (10) est montée de manière pivotante sur la base (8) de la plateforme, en particulier avec un rebord faisant face au siège (6) de l'opérateur, par l'intermédiaire d'une jointure prenant en particulier la forme d'une charnière (13), en particulier par l'intermédiaire d'une pluralité de joints ou charnières (13).

4. Engin de chantier (1) selon la revendication 3,
**caractérisé en ce que**
le dispositif d'actionnement (9) comprend une protection de jointure ou de charnière qui est disposée au-dessus de la jointure (13) et qui prend en particulier la forme d'une bande de protection chanfreinée (11) sur toute la longueur de la bordure de la poutre de frein (10) faisant face au siège (6) de l'opérateur.

5. Engin de chantier (1) selon l'une quelconque des revendications précédentes,
**caractérisé en ce que**
un rebord (19) de la poutre de frein (10) à l'opposé du siège (6) de l'opérateur est recourbé vers le bas.

6. Engin de chantier (1) selon l'une quelconque des revendications précédentes,
**caractérisé en ce que**
un mécanisme de transmission pour l'actionneur (15) est présent, ledit mécanisme de transmission étant entièrement recouvert vers le haut par la poutre de frein (10) et par la base (8) de la plateforme dans la zone de la plateforme (4) pour l'opérateur.

7. Engin de chantier (1) selon l'une quelconque des revendications précédentes,
**caractérisé en ce que**
le dispositif d'actionnement (9) comprend un ressort de rappel (16), et l'actionneur (15) est, de manière préférée, chargé par le ressort de rappel (16) de manière telle que, si la poutre de frein (10) n'est pas actionnée, la poutre de frein est automatiquement renvoyée à une position de repos au moyen du ressort de rappel (16), le ressort de rappel (16) étant en particulier disposé au-dessous de la poutre de frein (10).

8. Engin de chantier (1) selon la revendication 7,
**caractérisé en ce que**
le dispositif d'actionnement (9) comprend un capteur de rupture de ressort qui est configuré pour détecter une rupture du ressort de rappel (16) de la poutre de frein (10), le capteur de rupture de ressort étant en particulier disposé au-dessous de la poutre de frein (10).

9. Engin de chantier (1) selon l'une quelconque des revendications précédentes,
**caractérisé en ce que**
l'actionneur (15) est disposé de manière centrale par rapport à une extension de la poutre de frein (10) le long d'un axe central longitudinal de la poutre de frein (10).

10. Engin de chantier (1) selon l'une quelconque des revendications précédentes,
**caractérisé en ce que**
l'actionneur (15) comprend un cylindre (14) par l'intermédiaire duquel la poutre de frein (10) repose sur l'actionneur (15), en particulier de manière telle que la face inférieure de la poutre de frein (10) forme une surface de roulement pour le cylindre (14).

11. Engin de chantier (1) selon l'une quelconque des revendications précédentes,
**caractérisé en ce que**
l'actionneur (15) de la poutre de frein (10) prend la forme d'une pédale de frein, la pédale de frein étant disposée de telle sorte qu'elle puisse pivoter autour d'un axe (W) entre une position actionnée au maximum et une position où elle n'est pas actionnée.

12. Engin de chantier (1) selon l'une quelconque des revendications précédentes,
**caractérisé en ce que**
l'actionneur (15) de la poutre de frein (10) est mécaniquement relié à une valve de frein électrique, hydraulique ou pneumatique.

13. Engin de chantier (1) selon l'une quelconque des revendications précédentes,
**caractérisé en ce que**
le dispositif d'actionnement (9) comprend une protection latérale (12) qui est disposée sur un côté de la poutre de frein (10) à l'opposé du siège (6) de l'opérateur et est configurée pour étancher un espace creux (20) au-dessous de la poutre de frein (10) vers ledit côté.

14. Engin de chantier (1) selon l'une quelconque des revendications précédentes,
**caractérisé en ce que**
le dispositif d'actionnement (9) comprend un capteur (24) d'angle de rotation qui est installé sous la poutre de frein ou sous la base de la plateforme et qui est, en particulier, configuré pour déterminer un angle de rotation (a) de la poutre de frein (10).

15. Engin de chantier (1) selon l'une quelconque des revendications précédentes,
**caractérisé en ce que**
le dispositif de freinage fait partie d'un système de freinage de l'engin (1) de chantier et prend la forme d'un frein de service, en particulier d'un frein à disques, d'un frein à tambour ou d'un frein à plusieurs disques, le système de freinage comprenant un second dispositif de freinage qui est en particulier configuré sous forme d'un dispositif de freinage hydrostatique.

16. Engin de chantier (1) selon l'une quelconque des revendications précédentes,
**caractérisé en ce que**
le siège (6) de l'opérateur comprend au moins l'une des caractéristiques suivantes :
- le siège (6) de l'opérateur prend la forme d'un siège opérateur rotatif (6),
- le siège (6) de l'opérateur prend la forme d'un siège opérateur (6) déplaçable latéralement,
- le siège (6) de l'opérateur est disposé sur un support (22) du siège de l'opérateur déplaçable latéralement, ou
- le siège (6) de l'opérateur est disposé par rapport à la poutre de frein (10) de telle manière que la poutre de frein (10) soit située dans la zone de confort de l'opérateur de l'engin lorsqu'il est en position assise, ladite zone étant définie par la norme DIN EN ISO 6682:2009-06 pour les commandes actionnables au pied dans des engins de terrassement.

17. Engin de chantier (1) selon l'une quelconque des revendications précédentes,
**caractérisé en ce que**
l'engin de chantier (1) prend la forme d'un finisseur routier ou d'un compacteur de sol, en particulier prend la forme d'un rouleau compacteur (1a) sur pneumatiques.
